# EUROPÄISCHE PATENTSCHRIFT

(11) **EP 0 800 969 B1**
(45) Veröffentlichungstag und Bekanntmachung des Hinweises auf die Patenterteilung: **04.05.2005**
(21) Anmeldenummer: 97105241.0
(22) Anmeldetag: 27.03.1997
(51) Int. Cl.: B60R 22/20

(54) **Verstellvorrichtung für einen Umlenkbeschlag**
Return anchor adjustment device
Dispositif de réglage d'un renvoi

(30) Priorität: 10.04.1996 DE 29606521 U
(43) Veröffentlichungstag der Anmeldung: 15.10.1997
(73) Patentinhaber: TRW Automotive GmbH, 73553 Alfdorf (DE)
(72) Erfinder: Biller, Dieter, 73553 Alfdorf-Brech (DE)
(74) Vertreter: Degwert, Hartmut, Dipl.-Phys.

(56) Entgegenhaltungen:
- DE-A- 3 706 367
- DE-A- 4 011 767
- DE-A- 4 308 366
- DE-A- 4 327 820
- FR-A- 2 664 549
- US-A- 4 538 832
- US-A- 4 917 403

## Beschreibung

Die Erfindung betrifft eine Verstellvorrichtung für einen Umlenkbeschlag eines Fahrzeug-Sicherheitsgurtsystems, mit einer fahrzeugfesten, mit Rastöffnungen versehenen Schiene und einem in dieser verschiebbaren Schlitten, der für eine Anbringung des Umlenkbeschlages vorgesehen und mit einem Rastmechanismus versehen ist, der mit den Rastöffnungen zusammenwirken kann, wobei an dem Schlitten ein von dem Rastmechanismus funktional unabhängiges Sperrelement so gelagert ist, daß es aus einer Ruhestellung, in der es an. der Schiene nicht angreift, mittels einer auf den Schlitten einwirkenden, relativ zum Fahrzeug nach unten gerichteten Beschleunigung in eine Sperrstellung bewegbar ist.

Eine solche Verstellvorrichtung dient dazu, den Verlauf des Sicherheitsgurtes optimal an die Größe des jeweiligen Fahrzeuginsassen anzupassen. Probleme bei der Verwendung einer solchen Verstellvorrichtung können auftreten, wenn sich der Schlitten bei einem Unfall zwischen zwei Rastöffnungen befindet, er also nicht vorschriftsmäßig mittels des Rastmechanismus an einer Rastöffnung festgelegt ist. Dieses Problem wird noch verschärft, wenn das Sicherheitsgurtsystem mit einem Gurtstraffer versehen ist, der bei einem Unfall die Gurtlose aus dem Sicherheitsgurtsystem herauszieht. Die dabei auf den Umlenkbeschlag einwirkenden Kräfte können dazu führen, daß der Rastmechanismus nicht sicher in die nächstfolgende Rastöffnung eingreift und daher der Schlitten relativ zum Fahrzeug nach unten verlagert wird, wodurch die Wirkung des Gurtstraffers beeinträchtigt wird. Es sind daher Rastmechanismen bekannt, die ein sicheres Eingreifen in die jeweils nächstfolgende Rastöffnung auch dann gewährleisten sollen, wenn der Schlitten sehr stark relativ zum Fahrzeug nach unten beschleunigt wird. Allerdings wird auch bei einem derart verbesserten Rastmechanismus die Wirkung des Gurtstraffers durch den Weg beeinträchtigt, den der Schlitten bis zum Eingreifen des Rastmechanismus in die nächstfolgende Rastöffnung zurücklegt.

Aus der gattungsgemäßen FR-A-2 664 549 ist eine Verstellvorrichtung der eingangs genannten Art bekannt, bei der das Sperrelement so am Schlitten gelagert ist, daß es in der Sperrstellung in eine der Rastöffnungen der Schiene eingreift. Am Schlitten ist eine Abstützfläche vorgesehen, die am Sperrelement angreift und dieses in Richtung der Rastöffnungen drückt. Das Sperrelement verkeilt sich in der Sperrstellung also zwischen dem Rand der entsprechenden Rastöffnung der Schiene und der Abstützfläche am Schlitten.

Es ist Aufgabe der Erfindung, eine Verstellvorrichtung der eingangs genannten Art dahingehend weiterzubilden, daß der Schlitten bei einer Gurtstraffung auch dann, wenn der Rastmechanismus nicht in eine der Rastöffnungen eingreift, nach einem möglichst kurzen Weg zuverlässig festgelegt wird.

Diese Aufgabe wird bei einer Verstellvorrichtung der eingangs genannten Art mit den Merkmalen des kennzeichnenden Teils des Anspruchs 1 gelöst. Das Sperrelement blockiert den Schlitten nach einer Bewegung von wenigen Millimetern, so daß fast keine zusätzliche Gurtlose erzeugt wird, wenn der Rastmechanismus nicht vorschriftsmäßig in eine Rastöffnung eingreift. Dies ist darauf zurückzuführen, daß erfindungsgemäß das Sperrelement nicht in eine der Rastöffnungen der Schiene eingreift, so daß eine Blockierung nur entsprechend dem Abstand der Rastöffnungen voneinander möglich wäre, sondern sich im Inneren der Schiene verkeilt, also zwischen einander gegenüberliegenden Innenflächen der Schiene verklemmt, wodurch eine Blockierung in jeder beliebigen Position in der Schiene möglich ist.

Vorteilhafte Ausgestaltungen der Erfindung ergeben sich aus den Unteransprüchen.

Die Erfindung wird nachfolgend unter Bezugnahme auf zwei Ausführungsformen beschrieben, die in der Zeichnung dargestellt sind. In dieser zeigen:
- Fig. 1 eine schematische teilgeschnittene Seitenansicht einer ersten Ausführungsform einer erfindungsgemäßen Verstellvorrichtung;
- Fig. 2 eine schematische teilgeschnittene Detailansicht einer zweiten Ausführungsform einer erfindungsgemäßen Verstellvorrichtung; und
- Fig. 3 eine perspektivische Detailansicht der Verstellvorrichtung von Fig. 2.

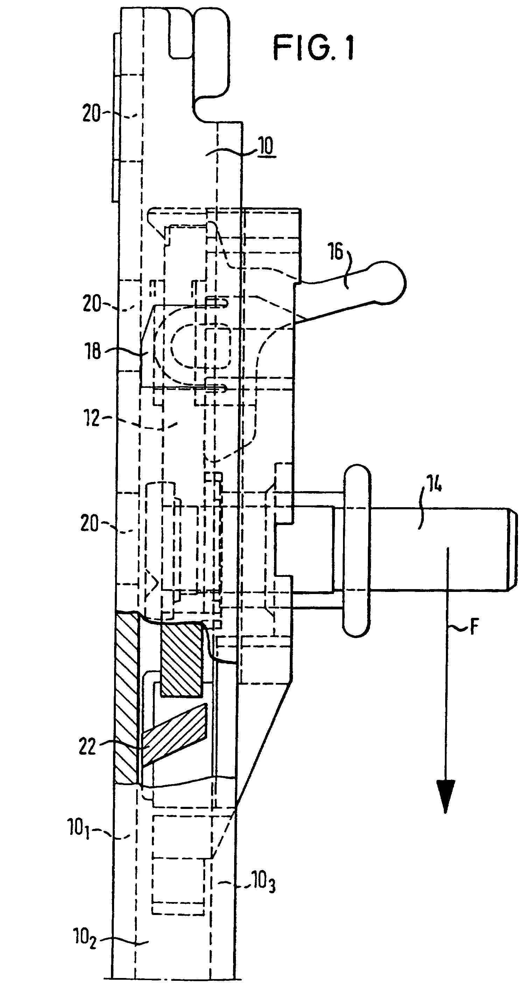

In Figur 1 ist eine erste Ausführungsform einer erfindungsgemäßen Verstellvorrichtung dargestellt. Die Verstellvorrichtung enthält eine fahrzeugfeste Schiene 10, in der ein Schlitten 12 verschiebbar angeordnet ist, an dem ein Bolzen 14 für die Anbringung eines (nicht dargestellten) Umlenkbeschlages befestigt ist. Die Schiene besteht aus einem Bodenteil 10₁, zwei zu diesem senkrechten Seitenteilen 10₂ und zwei dem Bodenteil 10₁ gegenüberliegenden, sich ausgehend von den Seitenteilen erstreckenden Vorderteilen 10₃. An dem Schlitten 12 ist ein nur schematisch angedeuteter Rastmechanismus 16 vorgesehen, durch dessen Betätigung der Schlitten 12 in der Längsrichtung der Schiene relativ zum Fahrzeug nach oben und nach unten verschoben werden kann. Der Rastmechanismus 16 weist einen Riegel 18 auf, der in Rastöffnungen 20 eingreifen kann, so daß der Schlitten 12 relativ zur Schiene 10 festgelegt ist.

In dieser Figur ist der Schlitten 12 in einer an sich unerwünschten Betriebsstellung dargestellt, die aber in der Praxis nicht zuverlässig verhindert werden kann. Der Riegel 18 befindet sich geringfügig unterhalb einer Rastöffnung 20, so daß er in diese nicht eingreifen kann. Wenn in diesem Stellung über den Umlenkbeschlag eine nach unten gerichtete Kraft auf den Schlitten 12 einwirkt, die durch den Pfeil F symbolisiert ist und von der Straffwirkung eines Gurtstraffers stammen kann, der die Gurtlose aus dem Sicherheitsgurt herauszieht, würde sich der Schlitten 12 mindestens bis zur nächsten Rastöffnung 20 nach unten bewegen. Dies würde zu einer zusätzlichen Gurtlose im Sicherheitsgurt führen, die für die Rückhaltewirkung des Sicherheitsgurts nachteilig ist.

Um eine solche Abwärtsbewegung des Schlittens 12 zu verhindern, ist die erfindungsgemäße Verstellvorrichtung mit einem von dem Rastmechanismus 16 funktional unabhängigen Sperrelement 22 versehen. Dieses ist im Inneren der Schiene 10 so am Schlitten 12 gelagert, daß es sowohl in der Längsrichtung der Schiene 10 begrenzt zum Schlitten 12 bewegbar als auch um seinen Schwerpunkt drehbar ist. Das Sperrelement 22 hat die Form eines schiefwinkligen Parallelepipeds, von dem je zwei Seitenflächen zum Bodenteil 10₁ bzw. den Vorderteilen 10₃ der Schiene 10 und zu den Seitenteilen 10₂ der Schiene 10 parallel sind. Wenn auf den Schlitten 12 eine relativ zum Fahrzeug nach unten gerichtete Beschleunigung einwirkt, kommt es aufgrund der Massenträgheit des Sperrelements 22 zu einer Relativbewegung zwischen dem Sperrelement 22 und dem Schlitten 12, so daß der Schlitten an dem bezüglich Fig. 1 oberen Rand des Sperrelements 22, also bezüglich dessen Schwerpunkt exzentrisch, angreift. Dies führt zu einer Drehung der Sperrelements 22 im Uhrzeigersinn. Dadurch verkeilt sich das Sperrelement 22 zwischen dem Bodenteil 101 und den Vorderteilen 10₃ der Schiene, so daß eine Bewegung des Schlittens 12 nach unten nach einer Strecke von wenigen Millimetern gestoppt wird. Die Straffwirkung eines Gurtstraffers wird daher fast nicht durch eine zusätzliche Gurtlose beeinträchtigt, selbst wenn sich der Schlitten 12 in der in Figur 1 dargestellten ungünstigen Betriebsstellung befindet.

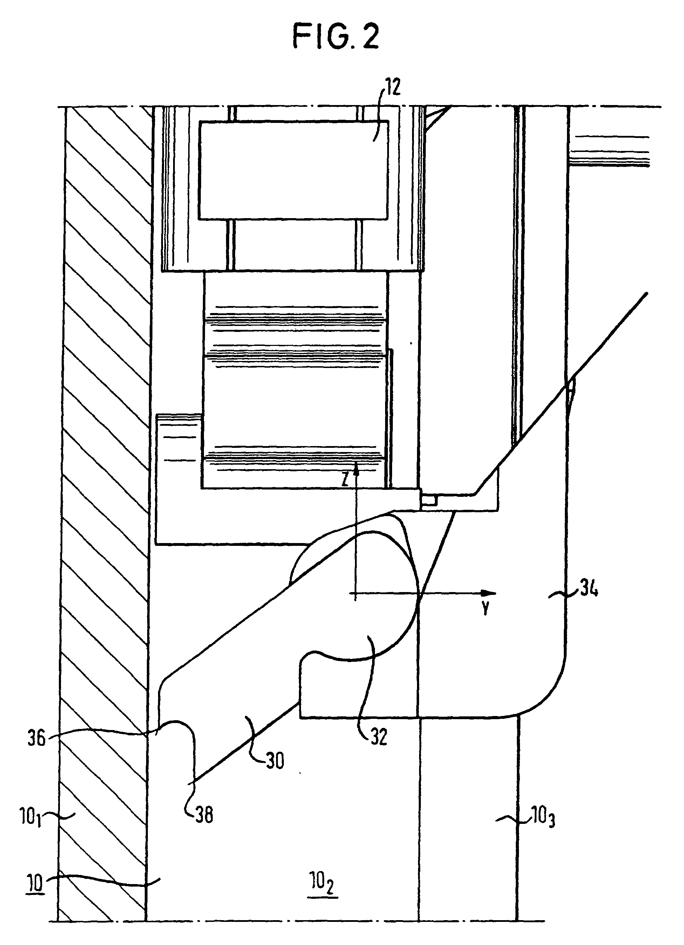

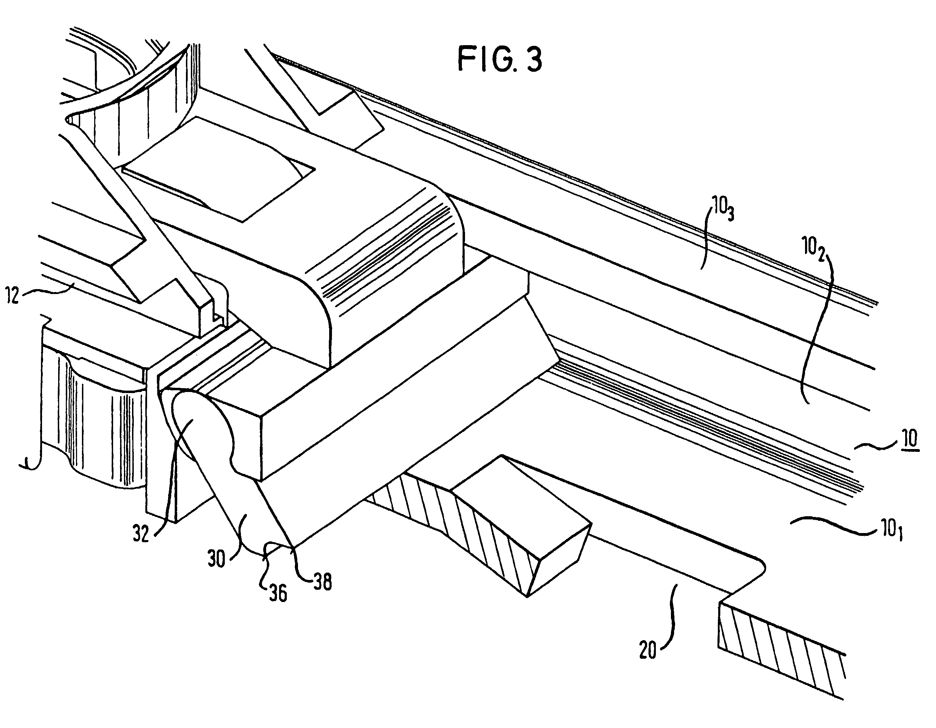

In den Figuren 2 und 3 ist eine zweite Ausführungsform einer erfindungsgemäßen Verstellvorrichtung gezeigt. In diesen Figuren sind aus Figur 1 bekannte Elemente mit denselben Bezugszeichen versehen; hinsichtlich ihrer Funktion wird auf die Erläuterung zu Figur 1 verwiesen.

Im Gegensatz zur ersten Ausführungsform besteht bei der zweiten Ausführungsform das Sperrelement aus einer Sperrklinke 30. Diese Sperrklinke 30 ist um eine außerhalb ihres Schwerpunktes liegende, zu den Seitenteilen 10₂ der Schiene 10 senkrechte Achse schwenkbar an einer den Vorderteilen 10₃ zugewandten Abstützseite 32 in einem Lagerteil 34 gelagert, das aus Kunststoff besteht und fest mit dem Schlitten 12 verbunden ist. An ihrer dem Bodenteil 10₁ zugewandten Seite ist die Sperrklinke 30 mit einer Eingriffskante 36 und einer zu dieser parallelen Stützkante 38 versehen. Die Außenkontur der Sperrklinke 30 hat, in einem Querschnitt senkrecht zur Schwenkachse gesehen, eine kreisbogenförmige Gestalt am Abstützende 32 und zwischen der Abstützseite 32 und der Stützkante 38 auf der nach unten gerichteten Seite eine Einschnürung, so daß zusammen mit dem Lagerteil 34 ein Schwenklager gebildet ist.

Wenn der Schlitten 12 nach unten beschleunigt wird, wird diese Bewegung über das Lagerteil 34 in die Sperrklinke 30 eingeleitet. Da diese Krafteinleitung bezüglich des Schwerpunkts der Sperrklinke 30 exzentrisch ist, führt die Sperrklinke 30 aufgrund ihrer Massenträgheit eine Schwenkbewegung bezüglich Figur 2 im Uhrzeigersinn aus. Dabei greift die Eingriffskante 36 und bei fortgesetzter Belastung auch die Abstützkante 38 am Bodenteil 10₁ der Schiene 10 an, und nach einer geringfügigen Verformung des Lagerteils 34 stützt sich die Abstützseite 32 der Sperrklinke 30 an den Vorderteilen 10₃ der Schiene 10 ab. Durch diese Verkeilung der Sperrklinke 30 im Inneren der Schiene 10 wird eine Bewegung des Schlittens 12 nach unten sicher verhindert.

Durch die Erfindung ist also eine Verstellvorrichtung geschaffen, bei der in zuverlässiger und konstruktiv besonders einfacher Weise eine Bewegung des Schlittens nach unten innerhalb von wenigen Millimetern blockiert wird, falls der Rastmechanismus nicht vorschriftsmäßig in eine Rastöffnung eingreift und der Schlitten nach unten beschleunigt wird. Das Sperrelement ist ein einfach herzustellendes Metallteil, das gestanzt oder gesintert werden kann.

## Patentansprüche

1. Verstellvorrichtung für einen Umlenkbeschlag eines Fahrzeug-Sicherheitsgurtsystems, mit einer fahrzeugfesten, mit Rastöffnungen (20) versehenen Schiene (10) und einem in dieser verschiebbaren Schlitten (12), der für eine Anbringung des Umlenkbeschlages vorgesehen und mit einem Rastmechanismus (16) versehen ist, der mit den Rastöffnungen (20) zusammenwirken kann, wobei an dem Schlitten (12) ein von dem Rastmechanismus (16) funktional unabhängiges Sperrelement (22; 30) so gelagert ist, daß es aus einer Ruhestellung, in der es an der Schiene (10) nicht angreift, mittels einer auf den Schlitten (12) einwirkenden, relativ zum Fahrzeug nach unten gerichteten Beschleunigung in eine Sperrstellung bewegbar ist, **dadurch gekennzeichnet, daß** das Sperrelement (22; 30) so ausgestaltet ist, daß es sich in der Sperrstellung im Inneren der Schiene verkeilt, so daß der Schlitten (12) festgelegt ist.

2. Verstellvorrichtung nach Anspruch 1, bei der die Schiene (12) ein Bodenteil (10₁), zwei sich zu diesem senkrecht erstreckende Seitenteile (10₂) und zwei dem Bodenteil (10₁) gegenüberliegende, sich ausgehend von den Seitenteilen (10₂) erstreckende Vorderteile (10₃) aufweist, zwischen denen ein sich in der Längsrichtung der Schiene (10) erstreckender Durchgangsschlitz gebildet ist, **dadurch gekennzeichnet, daß** das Sperrelement (22; 30) im Inneren der Schiene (10) angeordnet ist.

3. Verstellvorrichtung nach Anspruch 2, **dadurch gekennzeichnet, daß** das Sperrelement die Form eines schiefwinkligen Parallelepipeds (22) hat, das um eine zum Bodenteil (10₁) senkrechte, im wesentlichen durch den Schwerpunkt des Parallelepipeds (22) laufende Schwenkachse aus der Ruhestellung in die Sperrstellung bewegbar ist, in der die beiden Stirnseiten des Parallelepipeds (22) an den Seitenteilen (10₂) der Schiene (10) angreifen.

4. Verstellvorrichtung nach Anspruch 2, **dadurch gekennzeichnet, daß** das Sperrelement die Form eines schiefwinkligen Parallelepipeds (22) hat, das um eine zu den Seitenteilen (10₂) senkrechte, im wesentlichen durch den Schwerpunkt des Parallelepipeds (22) laufende Schwenkachse aus der Ruhestellung in die Sperrstellung bewegbar ist, in der zwei einander gegenüberliegende Seitenflächen des Parallelepipeds (22) (22) an der Bodenwand (10₁) und an den Vorderteilen (10₃) der Schiene (10) angreifen.

5. Verstellvorrichtung nach Anspruch 2, **dadurch gekennzeichnet, daß** das Sperrelement die Form einer Sperrklinke (30) hat, die um eine exzentrische, zu den Seitenteilen (10₂) der Schiene (10) senkrechte Achse schwenkbar an einer den Vorderteilen (10₃) der Schiene zugewandten Abstützseite (32) gelagert ist, und daß die Sperrklinke (30) auf ihrer dem Bodenteil (10₁) der Schiene (10) zugewandten Seite mit einer Eingriffskante (36) versehen ist.

6. Verstellvorrichtung nach Anspruch 5, **dadurch gekennzeichnet, daß** die Sperrklinke (30) mit einer zur Eingriffskante (36) parallelen Stützkante (38) versehen ist.

7. Verstellvorrichtung nach einem der Ansprüche 5 und 6, **dadurch gekennzeichnet, daß** die Abstützseite (32) der Sperrklinke (30), in einem Querschnitt senkrecht zur Schwenkachse gesehen, eine kreisbogenförmige Außenkontur hat.

8. Verstellvorrichtung nach Anspruch 7, **dadurch gekennzeichnet, daß** die Außenkontur der Sperrklinke (30), in einem Querschnitt senkrecht zur Schwenkachse gesehen, zwischen der Abstützseite (32) und der Eingriffskante (36) auf der relativ zum Fahrzeug nach unten gerichteten Seite eine Einschnürung aufweist.

## Claims

1. An adjusting device for a deflection fitting of a vehicle safety belt system, comprising a vehicle-fixed rail (10) which is provided with detent openings (20), and a slider (12) which is adapted for sliding movement in the rail and provided for attachment of the deflection fitting and which has a detent mechanism (16) adapted to cooperate with the detent openings (20), a locking element (22; 30) which is functionally independent of the detent mechanism (16) being mounted at the slider (12) in such a way that the locking element is movable out of a rest position, in which it does not engage the rail (10), into a locking position by means of an acceleration acting on the slider (12) and directed downwards in relation to the vehicle, **characterized in that** the locking element (22; 30) is configured such that in the locking position it gets jammed in the interior of the rail so that the slider (12) is locked in place.

2. The adjusting device as claimed in claim 1, in which the rail (10) includes a bottom part (10₁), two side parts (10₂) extending perpendicularly thereto, and two front parts (10₃) located opposite the bottom part (10₁) and extending from the side parts (10₂), a through slot extending in the longitudinal direction of the rail (10) being formed between the front parts, **characterized in that** the locking element (22; 30) is arranged in the interior of the rail (10).

3. The adjusting device as claimed in claim 2, **characterized in that** the locking element has the shape of an oblique-angled parallelepipedon (22) which is movable about a pivot axis that is perpendicular to the bottom part (10₁) and extends substantially through the center of gravity of the parallelepipedon (22), out of the rest position into the locking position, in which the two end faces of the parallelepipedon (22) engage the side parts (10₂) of the rail (10).

4. The adjusting device as claimed in claim 2, **characterized in that** the locking element has the shape of an oblique-angled parallelepipedon (22) which is movable about a pivot axis that is perpendicular to the side parts (10₂) and extends substantially through the center of gravity of the parallelepipedon (22), out of the rest position into the locking position, in which two mutually opposite side faces of the parallelepipedon (22) engage the bottom wall (10₁) and the front parts (10₃) of the rail (10).

5. The adjusting device as claimed in claim 2, **characterized in that** the locking element has the form of a locking pawl (30) which is mounted for pivoting movement about an eccentric axis perpendicular to the side parts (10₂) of the rail (10) on a support side (32) facing the front parts (10₃) of the rail, and that the locking pawl (30) is provided with an engagement edge (36) on its side facing the bottom part (10₁) of the rail (10).

6. The adjusting device as claimed in claim 5, **characterized in that** the locking pawl (30) is provided with a support edge (38) which is parallel to the engagement edge (36).

7. The adjusting device as claimed in either of claims 5 and 6, **characterized in that** the support side (32) of the locking pawl (30), as viewed in a cross-section perpendicular to the pivot axis, has an outer contour in the shape of a circular arc.

8. The adjusting device as claimed in claim 7, **characterized in that** the outer contour of the locking pawl (30), as viewed in a cross-section perpendicular to the pivot axis, has a constriction between the support side (32) and the engagement edge (36) on the side directed downwards in relation to the vehicle.

## Revendications

1. Dispositif de réglage d'une ferrure de renvoi d'un système de ceinture de sécurité de véhicule, comportant un rail (10) solidaire du véhicule et pourvu d'ouvertures d'enclenchement (20) et un chariot (12) déplaçable dans ce rail, lequel est prévu pour un montage de la ferrure de renvoi et qui est pourvu d'un mécanisme d'enclenchement (16) qui peut coopérer avec les ouvertures d'enclenchement (20), un élément de blocage (22 ; 30) indépendant du mécanisme d'enclenchement (16), du point de vue fonctionnel, étant monté sur le chariot (12) de telle sorte qu'il peut être déplacé depuis une position de repos dans laquelle il ne s'engage pas sur le rail (10) jusque dans une position de blocage au moyen d'une accélération agissant sur le chariot (12) et orientée vers le bas par rapport au véhicule, **caractérisé en ce que** l'élément de blocage (22 ; 30) est réalisé de telle sorte que dans la position de blocage, il se cale à l'intérieur du rail de telle sorte que le chariot (12) est immobilisé.

2. Dispositif de réglage selon la revendication 1, dans lequel le rail (10) présente une partie de fond (10₁) deux parties latérales (10₂) s'étendant perpendiculairement à celle-ci et deux parties antérieures (10₃) opposées à la partie de fond (10₁) et s'étendant depuis les parties latérales (10₂), parties antérieures entre lesquelles est formée une fente de passage s'étendant en direction longitudinale du rail (10), **caractérisé en ce que** l'élément de blocage (22 ; 30) est agencé à l'intérieur du rail (10).

3. Dispositif de réglage selon la revendication 2, **caractérisé en ce que** l'élément de blocage a la forme d'un parallélépipède (22) oblique qui peut être déplacé autour d'un axe de pivotement perpendiculaire à la partie de fond (10₁) et s'étendant sensiblement à travers le centre de gravité du parallélépipède (22), depuis la position de repos jusque dans la position de blocage dans laquelle les deux faces frontales du parallélépipède (22) s'engagent sur les parties latérales (10₂) du rail (10).

4. Dispositif de réglage selon la revendication 2, **caractérisé en ce que** l'élément de blocage a la forme d'un parallélépipède (22) oblique qui peut être déplacé autour d'un axe de pivotement perpendiculaire aux parties latérales (10₂) et s'étendant sensiblement à travers le centre de gravité du parallélépipède (22), depuis la position de repos jusque dans la position de blocage dans laquelle deux faces latérales opposées l'une à l'autre du parallélépipède (22) s'engagent sur la partie de fond (10₁) et sur les parties antérieures (10₃) du rail (10).

5. Dispositif de réglage selon la revendication 2, **caractérisé en ce que** l'élément de blocage a la forme d'un cliquet d'arrêt (30) qui est monté à pivotement autour d'un axe excentrique perpendiculaire aux parties latérales (10₂) du rail (10) sur une face d'appui (32) tournée vers les parties antérieures (10₃) du rail (10), et **en ce que** le cliquet d'arrêt (30) est pourvu d'une arête d'engagement (36) sur sa face tournée vers la partie de fond (10₁) du rail (10).

6. Dispositif de réglage selon la revendication 5, **caractérisé en ce que** le cliquet d'arrêt (30) est pourvu d'une arête d'appui (30) parallèle à l'arête d'engagement (36).

7. Dispositif de réglage selon l'une des revendications 5 et 6, **caractérisé en ce que** la face d'appui (32) du cliquet d'arrêt (30), vue en coupe transversale perpendiculairement à l'axe de pivotement, a un contour extérieur en forme d'arc de cercle.

8. Dispositif de réglage selon la revendication 7, **caractérisé en ce que** le contour extérieure du cliquet d'arrêt (30), vu dans une coupe transversale perpendiculairement à l'axe de pivotement, présente un étranglement sur la face tournée vers le bas par rapport au véhicule, entre la face d'appui (32) et l'arête d'engagement (36).
